# EUROPEAN PATENT APPLICATION

(11) **EP 4 468 454 A1**
(43) Date of publication of application: **27.11.2024**
(21) Application number: 23175457.3
(22) Date of filing: 25.05.2023
(51) Int. Cl.: H01M 10/613, H01M 10/647, H01M 10/653, H01M 10/6554, H01M 10/6556, H01M 50/209, H01M 50/264

(54) **BATTERY ASSEMBLY AND METHOD OF MANUFACTURING A BATTERY ASSEMBLY**

(71) Applicant: Henkel AG & Co. KGaA, 40589 Düsseldorf (DE)
(72) Inventor: ABEDIAN, Alireza, 40599 Düsseldorf (DE); KARAOGLANIDIS, Georgios, 57019 Peraia (GR)
(74) Representative: Wagner Albiger & Partner Patentanwälte mbB

(57) **Abstract**

The invention relates to a battery assembly (1) comprising at least one battery module (2), a frame structure (3) and a cooling device (5), wherein the battery module (2) comprises at least one battery cell and the battery module (2) and the cooling device (5) are fastened to the frame structure (3), and wherein a structural adhesive (4a) is disposed between the battery module (2) and the frame structure (3) for fastening the battery module (2) to the frame structure (3) and wherein a structural adhesive (4b) is disposed between the cooling device (5) and the frame structure (3) for fastening the cooling device (5) to the frame structure (3). The invention further relates to a method of manufacturing such a battery assembly (1).

## Description

The present invention relates to a battery assembly comprising at least one battery module, a frame structure and a cooling device, wherein the battery module comprises at least one battery cell, and wherein the battery module and the cooling device are fastened to the frame structure. The invention further relates to a method of manufacturing such a battery assembly.

Nowadays, high-voltage batteries are used in numerous applications, especially in connection with electromobility. Several battery cells are assembled into battery modules, which in turn are inserted into an outer frame structure together with a cooling device. The design of such high-voltage batteries is often referred to as "module-to-pack-design".

Until now, the individual battery modules and the cooling device have been fastened within the frame structure essentially by means of bolting connections. This involves considerable material, manufacturing and cost outlay; in addition, the weight of the bolting connections contributes not insignificantly to the overall weight of the battery assembly. This is considered to be in need of improvement.

It is therefore an object of the present invention to provide a battery assembly, comprising at least one battery module, a frame structure and a cooling device, which can be manufactured more cheaply and has a lower weight than known battery assemblies. It is a further object of the invention to provide a method of manufacturing such a battery assembly.

These objects are accomplished by a battery assembly with the features of patent claim 1 and by a method of manufacturing a battery assembly with the features of patent claim 7.

Advantageous embodiments and further developments of the invention are the subject of the dependent claims.

According to claim 1, the invention is a battery assembly comprising at least one battery module, a frame structure and a cooling device, wherein the battery module comprises at least one battery cell, and wherein the battery module and the cooling device are fastened to the frame structure. The invention is characterized in that a structural adhesive is disposed between the battery module and the frame structure for fastening the battery module to the frame structure and that a structural adhesive is disposed between the cooling device and the frame structure for fastening the cooling device to the frame structure.

In other words, the invention envisages replacing all or at least part of the bolting connections commonly used in the prior art for fastening the battery modules and the cooling device to the frame structure with suitable adhesives. Indeed, it has been shown that in many cases the connections in question do not need to be detachable, since servicing, maintenance or replacing of modules and the cooling device is not usually carried out. By using adhesives instead of bolting connections, both the material costs and the weight of the battery assembly can be reduced.

According to the invention, a structural adhesive is disposed between the battery module and the frame structure to fasten the battery module to the frame structure and a structural adhesive is disposed between the cooling device and the frame structure to fasten the cooling device to the frame structure. Structural adhesives are characterized by high strength and durability of the bond produced. They are easy and quick to apply, both manually and automatically.

According to one embodiment of the invention, a thermally conductive adhesive is disposed between the battery module and the cooling device. Thermally conductive adhesives are characterized by good heat conductivity, mid strength and durability and are used to support and enhance the bond provided by the structural adhesive. The cooling device, which may be formed, for example, as one or more cooling plates through which a coolant flows, is used to dissipate heat from the battery module. The thermally conductive adhesive disposed between the battery module and the cooling device thus primarily ensures heat transfer between the battery module and the cooling device, but also helps to provide a bond between these two components.

In other words, it is a combination of structural adhesive and thermally conductive adhesive which is used in this embodiment to replace all or at least part of the bolting connections commonly used to fix the different components within the battery assembly.

This also means that the present invention increases the application possibilities for structural adhesives and thermally conductive adhesives by using them to replace bolting connections within battery assemblies.

It may be envisaged that fastening of the battery module and the cooling device to the frame structure is exclusively effected by means of the structural adhesive. In other words, bolting connections can be dispensed with completely, since a sufficiently strong and durable connection can be produced by applying the structural adhesive in contact areas between the cooling device and the frame structure or between the battery module and the frame structure.

According to one embodiment of the invention, the battery module is directly connected to the cooling device, the connection being effected exclusively by means of the thermally conductive adhesive. In other words, bolting connections can also be completely dispensed with when connecting the battery module and cooling device.

According to a further embodiment, the battery assembly comprises an intermediate plate as part of the frame which is arranged between the cooling device and the battery module and can be welded to the frame structure, the intermediate plate being connected to both the cooling device and the battery module exclusively by means of the thermally conductive adhesive. In this embodiment, the intermediate plate located between the battery module and the cooling device provides stiffness and serves to protect the battery module in the event of a leak in the cooling device. If coolant leaks from the cooling device in the event of a leak, the intermediate plate prevents the coolant from entering the battery modules, which can prevent damage, for example a short circuit, in the battery cells. To ensure heat transfer between the battery module and the cooling device, the intermediate plate is connected to both the battery module and the cooling device by means of the thermally conductive adhesive.

In other words, the invention comprises embodiments of the battery assembly in which the connections between the battery modules, the frame structure, the cooling device and optionally the intermediate plate are exclusively effected by a combination of structural and thermally conductive adhesives.

One embodiment of the invention provides that the battery assembly comprises a bottom cover on which the frame structure is arranged, the bottom cover being fastened to the frame structure by means of a structural adhesive. It may thus be provided in accordance with the invention to dispense with connecting means such as bolting connections, even between the bottom cover and the frame structure, and to make the connection exclusively by means of a structural adhesive, since subsequent separation of these components is generally not necessary. A top cover opposite the bottom cover, on the other hand, is preferably detachably connected to the frame structure, for example by means of bolting connections, so that it can be easily removed for maintenance work.

By replacing bolting connections in the said connection areas with structural adhesive or with a combination of structural and thermally conductive adhesive, as provided for in the invention, material, manufacturing and labour costs and weight can be saved. Battery assemblies, in particular so called "module-to-pack" high-voltage batteries composed of several battery modules, can be provided in this way at lower cost and with lower weight.

According to claim 7, the invention also relates to a method for manufacturing a battery assembly comprising at least one battery module, a frame structure, and a cooling device, comprising the following steps:
- providing a frame structure, a cooling device and at least one battery module,
- applying a structural adhesive and a thermally conductive adhesive to areas of the cooling device,
- inserting the cooling device so that a bond is formed between the cooling device and the frame structure by means of the structural adhesive,
- applying a structural adhesive to areas of the frame structure,
- inserting the at least one battery module so that a bond is formed between the battery module and the cooling device by means of the thermally conductive adhesive, at the same time forming a bond between the battery module and the frame structure by means of the structural adhesive.

In one embodiment of the method, an intermediate plate forms part of the frame structure and can for example be welded to the frame structure. In this case, the method includes the step of applying a thermally conductive adhesive on both sides of the intermediate plate instead of applying it to the cooling device, in a way that a bond is formed between the intermediate plate and the subsequently inserted cooling device as well as between the intermediate plate and the subsequently inserted battery module by means of the thermally conductive adhesive.

In the following, the invention is explained in more detail by means of embodiment examples and with reference to the accompanying drawings. Showing:
- Figure 1:: a schematic partial view of a first embodiment of a battery assembly according to the invention in a sectional view;
- Figure 2:: a schematic partial view of a second embodiment of a battery assembly according to the invention in a sectional view;
- Figure 3:: a schematic partial view of a further embodiment of a battery assembly according to the invention in a sectional view.

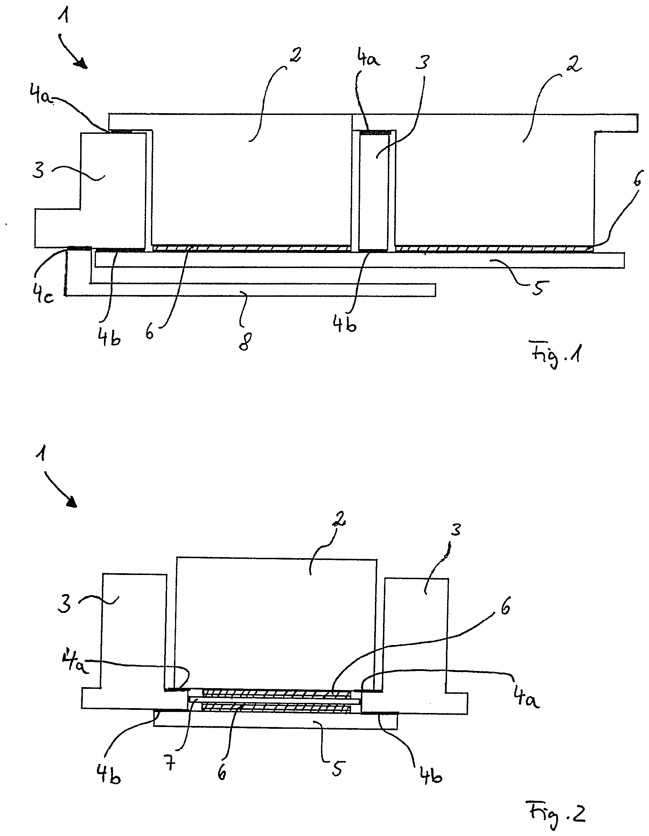

Figure 1 shows a partial view of a battery assembly designated in its entirety as 1. The battery assembly 1 comprises several battery modules 2, of which two battery modules 2 are shown in the sectional view of Figure 1. Each battery module 2 includes a plurality of battery cells, which are not shown individually in the figures for clarity. The battery assembly 1 may, for example, be a high-voltage battery for use in an electric vehicle.

The battery modules 2 are arranged in a frame structure 3 formed by several beams, of which only two beams are shown in Figure 1. The battery modules 2 are secured to the frame structure 3, with a structural adhesive 4a being arranged between the battery modules 2 and the frame structure 3 for attachment, which can be seen in the upper area of Figure 1.

The battery assembly 1 also comprises a cooling device 5, which is designed as a cooling plate through which a coolant flows and is arranged directly below the battery modules 2. The cooling device 5 serves to dissipate heat from the battery modules 2. The cooling device 5 is in turn secured to the beams of the frame structure 3 by means of structural adhesive 4b. Furthermore, a thermally conductive adhesive 6 is arranged between the cooling device 5 and each of the battery modules 2. The thermally conductive adhesive 6 primarily ensures heat transfer between the battery modules 2 and the cooling device 5, and in addition it also helps to provide a bond between the individual components.

Finally, the battery assembly 1 comprises a bottom cover 8 on which the frame structure 3 is arranged. The bottom cover 8 is also secured to the frame structure 3 by means of structural adhesive 4c.

In the embodiment example according to Figure 1, the battery modules 2, the cooling device 5 and the bottom cover 8 are secured to the frame structure 3 exclusively by means of the structural adhesive 4a, 4b, 4c, and the connection between the battery modules 2 and the cooling device 5 is effected exclusively by means of the thermally activatable adhesive 6. In other words, the use of bolting connections is dispensed with entirely for the connections mentioned. Nevertheless, it is also possible in principle to provide a combination of adhesive connections and connections by means of bolting connections.

Figure 2 shows a partial view of a further embodiment of a battery assembly 1. One battery module 2 is shown here, which is arranged between two beams of a frame structure 3. The battery module 2 is secured to each of the beams of the frame structure 3 via a structural adhesive 4a. A cooling device 5 is arranged below the battery module 2, which is secured to the frame structure 3 by means of a structural adhesive 4b. Unlike the embodiment example of Figure 1, however, an intermediate plate 7 is arranged between the battery module 2 and the cooling device 5, which provides stiffness and protects the battery module 2 and the battery cells contained therein in the event of a coolant leakage from the cooling device 5. The intermediate plate 7 is welded to the frame structure 3. The battery module 2 and the cooling device 5, respectively, are connected to the intermediate plate 7 by means of a thermally conductive adhesive 6. The thermally conductive adhesive 6 supports the bond between the individual components, but its main task is to ensure good heat transfer between the battery module 2 and the cooling device 5.

In the embodiment example of Figure 2, no bottom cover 8 is shown, but this can also be present in analogy to the embodiment example of Figure 1 and secured to the frame structure 3 in the same way as described there.

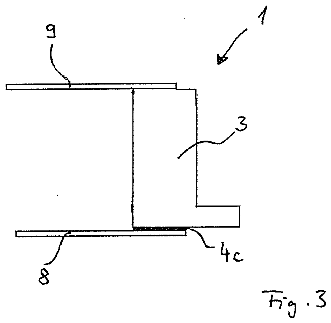

Figure 3 shows a section of a battery assembly 1, whereby in this view only the frame structure 3, a bottom cover 8 and a top cover 9 are shown. This battery assembly 1 also comprises one or more battery modules 2 and a cooling device 5, analogous to the embodiment examples of Figures 1 and 2, although these are not shown in Figure 3 for the sake of clarity.

The bottom cover 8 is connected to the frame structure 3 by means of structural adhesive 4c. The top cover 9, on the other hand, which must be able to be removed for maintenance purposes, is detachably connected to the frame structure 3, for example via bolting connections not shown here. Similarly, an upper cover 9 detachably connected to the frame structure 3 can also be provided in the embodiment examples shown in Figures 1 and 2.

By using the different adhesives and thereby largely eliminating the need for bolting connections to make the individual connections within the battery assembly 1, cost and weight can be saved so that such a battery assembly 1 can be provided at a lower cost and weight.

The process for manufacturing such a battery assembly 1 is now explained with reference to Figure 1. In a first process step, a frame structure 3, a cooling device (5) and at least one battery module (2) is provided. Subsequently, a structural adhesive 4b and a thermally conductive adhesive 6 is applied to individual areas of the cooling device 5. In a next step, the cooling device 5 is inserted so that a bond is formed between the cooling device 5 and the frame structure 3 by means of the structural adhesive 4b. Subsequently, a structural adhesive 4a is applied to areas of the frame structure 3 In a subsequent process step, the at least one battery module 2 is inserted so that a bond is formed between the battery module 2 and the cooling device 5 by means of the thermally conductive adhesive 6, while at the same time a bond is formed between the battery module 2 and the frame structure 3 by means of the structural adhesive 4a. Finally, a bottom cover 8 is fastened to the frame structure 3 by means of structural adhesive 4c.

If an intermediate plate 7 is provided between the cooling device 5 and the battery module 2, which can be welded to the frame structure 3 as shown in figure 2, the method includes the step of applying a thermally conductive adhesive 6 on both sides of the intermediate plate 7 instead of applying it to the cooling device 5, in a way that a bond is formed between the intermediate plate 7 and the subsequently inserted cooling device 5 as well as between the intermediate plate 7 and the subsequently inserted battery module 2 by means of the thermally conductive adhesive 6.

## Claims

1. Battery assembly (1), comprising at least one battery module (2),a frame structure (3) and a cooling device (5), the battery module (2) comprising at least one battery cell, and the battery module (2) and the cooling device (5) being fastened to the frame structure (3), **characterized in that** a structural adhesive (4a) is disposed between the battery module (2) and the frame structure (3) for fastening the battery module (2) to the frame structure (3) and that a structural adhesive (4b) is disposed between the cooling device (5) and the frame structure (3) for fastening the cooling device (5) to the frame structure (3).

2. Battery assembly (1) according to claim 1, **characterized in that** a thermally conductive adhesive (6) is disposed between the battery module (2) and the cooling device (5).

3. Battery assembly (1) according to claim 1 or 2, **characterized in that** fastening of the battery module (2) and the cooling device (5) to the frame structure (3) is exclusively effected by means of the structural adhesive (4a, 4b).

4. Battery assembly (1) according to one of claims 2 or 3, **characterized in that** the battery module (2) is directly connected to the cooling device (5), the connection being effected exclusively by means of the thermally conductive adhesive (6).

5. Battery assembly (1) according to one of claims 2 or 3, **characterized in that** the battery assembly (1) comprises an intermediate plate (7) which is arranged between the cooling device (5) and the battery module (2), the intermediate plate (7) being secured both to the cooling device (5) and to the battery module (2) exclusively by means of the thermally conductive adhesive (6).

6. Battery assembly (1) according to any one of claims 1 to 5, **characterized in that** the battery assembly (1) comprises a bottom cover (8) on which the frame structure (3) is arranged, the bottom cover (8) being secured to the frame structure (3) by means of structural adhesive (4c).

7. A method of manufacturing a battery assembly (1) comprising at least one battery module (2), a frame structure (3), and a cooling device (5), comprising the following steps:
- providing a frame structure (3), a cooling device (5) and at least one battery module (2),
- applying a structural adhesive (4b) and a thermally conductive adhesive (6) to areas of the cooling device (5),
- inserting the cooling device (5) so that a bond is formed between the cooling device (5) and the frame structure (3) by means of the structural adhesive (4b),
- applying a structural adhesive (4a) to areas of the frame structure (3),
- inserting the at least one battery module (2) so that a bond is formed between the battery module (2) and the cooling device (5) by means of the thermally conductive adhesive (6), at the same time forming a connection between the battery module (2) and the frame structure (3) by means of the structural adhesive (4a).
